# EUROPÄISCHE PATENTSCHRIFT

(11) **EP 2 401 661 B1**
(45) Veröffentlichungstag und Bekanntmachung des Hinweises auf die Patenterteilung: **21.12.2016**
(21) Anmeldenummer: 10711636.0
(22) Anmeldetag: 23.02.2010
(51) Int. Cl.: G05B 19/418

(54) **FÖRDERANLAGE ZUM FÖRDERN VON VEREINZELTEN STÜCKGÜTERN**
Supply assembly for supplying individual bulk goods
Installation de transport destinée au transport de marchandises au détail isolées

(30) Priorität: 24.02.2009 EP 09002554
(43) Veröffentlichungstag der Anmeldung: 04.01.2012
(73) Patentinhaber: Interroll Holding AG, 6592 Sant' Antonino (CH); Sew-Eurodrive GmbH & Co. KG, 76646 Bruchsal (DE)
(72) Erfinder: MALINA, Georg H., 42929 Wermelskirchen (DE); SPÄTH, Werner F., CH-5330 Bad Zurzach (CH)
(74) Vertreter: Eisenführ Speiser
(86) Internationale Anmeldenummer: PCT/EP2010/052293
(87) Internationale Veröffentlichungsnummer: WO 2010/097391

(56) Entgegenhaltungen:
- EP-A- 0 275 992
- DE-A1- 19 951 506
- DE-C1- 19 722 453
- US-A- 5 927 657
- US-A1- 2003 218 550

## Beschreibung

Die Erfindung betrifft eine Förderanlage zum Fördern von vereinzelten Stückgütern, umfassend: eine Vielzahl von Fördermotoren und zumindest eine Steuerungseinheit die zur Übersendung von Daten mit jedem Fördermotor zum Regeln und/oder Steuern der Fördermotoren verbunden ist. Ein weiterer Aspekt der Erfindung ist eine Energieversorgungs- und Datenübermittlungseinrichtung für eine solche Förderanlage und ein Verfahren zur Förderung von Stückgütern.

Förderanlagen der vorgenannten Art werden sowohl in der industriellen Fördertechnik, beispielsweise in Fertigungsanlagen, als auch in der Lagerhaltung, in Verteilsystemen, wie beispielsweise der Post- oder Paketverteilung oder der Gepäcklogistik eingesetzt, um Stückgüter unterschiedlicher Größe und Gewicht logistisch zu handhaben, d.h. insbesondere zu lagern und zu fördern. Ein typischer Aufbau einer solchen Förderanlage umfasst eine Vielzahl von Fördermotoren, die in mehreren Förderstraßen oder Förderabschnitten angeordnet sind, um dort befindliches Stückgut zu fördern. Durch eine Aneinanderreihung von mehreren Förderstrecken mit Verzweigungen und Zusammenführungen auf einer Ebene und zugleich einer Förderung der Stückgüter auch in unterschiedliche vertikale Ebenen können auf diese Weise Förderanlagen zusammengestellt werden, die den jeweiligen individuellen Bedürfnissen an anspruchsvolle logistische Aufgabenstellung entsprechen.

Förderanlagen dieser Art werden einerseits hinsichtlich der Größe und des Gewichts der darin zu fördernden/lagernden Stückgüter klassifiziert und ausgelegt. Die Energiezufuhr, aber auch die Sicherheitsvorkehrungen und die für die Erfassung von Stückgütern in den einzelnen Streckenabschnitten vorgesehene Sensorik muss an die Größe und das Gewicht der zu fördernden Stückgüter angepasst sein. Diese Anpassung ist insbesondere dann problematisch, wenn in einer Förderanlage Stückgüter in unterschiedlichen Gewichtsklassen, also Stückgüter, deren Gewicht sich um eine oder mehrere Großenordnungen unterscheidet, gefördert werden sollen oder die Sensorik zur Erfassung, der Stückgüter innerhalb einer Förderanlage von unterschiedlicher Art sein muss, um in der Förderanlage geförderte unterschiedliche Stückgüter zu erfassen. Typische unterschiedliche Stückgüter in solchen Förderanlagen sind insbesondere standardisierte Transportkästen unterschiedlicher Länge und Höhe, Paletten, aber auch beispielsweise Pakete mit bestimmten Mindest- oder Maximalabmessungen.

Je nach Einsatzzweck sind für Förderanlagen der vorgenannten Bauweise unterschiedliche Sicherheitsanforderungen zu erfüllen. So kann beispielsweise in Förderanlagen, die der Förderung von empfindlichen, beispielsweise bruchgefährdeten oder durch Stöße leicht in ihrer Funktion zu beeinträchtigenden Produkten dienen, es erforderlich sein, durch geeignete Sensorik und Sicherheitsvorkehrungen auf steuerungstechnischer Seite der Fördermotoren einen Betrieb der Förderanlage zu gewährleisten, bei dem die Stückgüter berührungsfrei, zumindest aber stoßfrei bzw. erschütterungsfrei gefördert werden können. In Förderaufgaben im Bereich der Lebensmitteltechnik, der Reinraumtechnik oder beispielsweise der Labortechnik sind wiederum hinsichtlich des Aufbaus der Förderanlage Anforderungen zu erfüllen, die eine Verschmutzung, ein Entstehen von Verschmutzungen und die Bildung von für diese Anwendung kritischen Keim- oder Verschmutzungsstellen vermeiden. Zu diesem Zweck wird für Förderanlagen für diese Bereiche insbesondere eine gute Reinigungsmöglichkeit gefordert, die einen entsprechenden geometrisch einfachen Aufbau notwendig macht.

Während diese teilweise sehr unterschiedlichen Anforderungen eine in hohem Maße angepasste und individualisierte Erstellung von Förderanlagen bedingen, wird im Zuge der grundsätzlich im Bereich der Logistik, Förder- und Lagertechnik angestrebten Rationalisierung sowohl im Betrieb als auch in der Montage oder dem Umbau von Förderanlagen angestrebt, die Montagezeiten oder Umrüstzeiten erheblich zu verkürzen und zu vereinfachen, um sie in schneller Weise durch Personal ausführen zu lassen, welches nicht einer detaillierten Schulung bedarf, um die Montage bzw. Umrüstung auszuführen. Aus diesem Grund wird zugleich - und im konstruktiven Widerspruch - zu der angestrebten Erfüllung von jeweils individuellen Anforderungen an Förderanlagen danach gestrebt, den Aufbau von Förderanlagen soweit zu vereinfachen, dass diese erleichterte Montage und Umrüstung ermöglicht wird.

Aus DE 102004038135 ist ein zonengesteuertes Fördersystem mit einer Zonensteuerung bekannt, welches insbesondere die Problematik adressiert, dass Artikel, die mit dem Fördersystem gefördert werden, präzise angehalten werden müssen. Hierzu wird eine spezifische Zonehsteuerung vorgeschlagen, die durch Verlangsamen der Fördergeschwindigkeit im Vorfeld eines Anhaltevorgangs eines Artikels das Rutschen des Artikels auf der Förderunterlage verhindern soll. Diese Zonensteuerung wird durch eine Vielzahl von Sensoren und einzelne Steuerungseinheiten realisiert, die jeweils individuell mit einem einzelnen Fördermotor einer Zone zusammenwirken. Die einzelnen Zonensteuerungen sind mit mehradrigen Signalleitungen jeweils miteinander verbunden, um die Übergabe von Produkten aus einer Zone in eine benachbarte Zone so kommunizieren zu können, dass die in jeder Zone vorgesehene Zonensteuerung den jeweils in die Zone eintretenden Artikel übernehmen kann. Nachteilig an dieser Vorrichtung ist jedoch, dass die Vielzahl der für einen sicheren Betrieb der Förderanlage erforderlichen Steuerungszonen die Anlage insgesamt kostenintensiv machen. Zudem wird durch die erforderliche signaltechnische Verbindung von jeweils benachbarten Zonensteuerungen miteinander ein erheblicher, bei der Montage und bei jeder Umrüstung erforderlicher Verkabelungsaufwand erzeugt, der die Förderanlage auch hinsichtlich Montage und Umrüstung kostenintensiv und zudem empfindlich gegenüber Montagefehlern macht. Ein weiterer Nachteil des zonengesteuerten Fördersystems nach diesem Stand der Technik liegt darin, dass für jeden Fördermotor eine individuelle Energiezufuhr vorgesehen werden muss, was insbesondere dann, wenn Fördermotoren unterschiedlicher Leistungsstärke und entsprechend unterschiedlichem Anspruch an die Energiequelle (beispielsweise unterschiedlicher elektrischer Spannungen als Energiequelle) eingesetzt werden, auch auf der Energieversorgungsseite einen aufwändigen Aufbau und eine aufwändige Verkabelung erfordert.

Aus. DE 1 9951506 A1 ist eine Rollenbahn eines Logistiksystems vorbekannt, wobei die Rollen einen Integrierten Antrieb aufweisen. Fest installierte Förderrollen werden durch einen internen Antrieb in Rotation versetzt und dann werden Stückgüter über diese Förderrollen hinweg durch deren Rotation gefördert.

DE 19951506 A1 offenbart weiterhin, in der Förderrolle eine informationsübertragende Einheit in einem Elektronikmodul vorzusehen. Dabei schlägt DE 19951506 A1 weiterhin vor, dass der Informationsfluss der Einheiten über den Pfad der elektrischen Energieversorgung der angetriebenen Rollen erfolgt. DE 19951506 A1 offenbart eine Energieflussleitung über ein Befestigungsteil B1 und ein Befestigungsteil B2, die einen elektrisch leitenden Kontakt darstellen.

Die Druckschrift US 5927657 A befasst sich mit einem Schlittenfördersystem, weiches seine Einsatzweise insbesondere in Fertigungsstraßen hat und sich dadurch auszeichnet, dass ein mit einem Antriebsmotor versehener Schlitten entlang einer Bahn bewegt wird. Diese Bahn wird durch entsprechend verlegte Schienen definiert, entlang der sich ein oder mehrere Schlitten unabhängig voneinander bewegen können. Um dies zu erreichen ist in den Schlitten eine induktive Antriebsvorrichtung vorgesehen, um die Schlitten entsprechend antreiben zu können (vgl. Spalte 2, Zeilen 29. 30).

Es ist ein erstes Ziel der vorliegenden Erfindung, eine Förderanlage bereitzustellen, die hinsichtlich der Montage und der Umrüstung einfacher auf- bzw. umzubauen ist und einen solchen Auf- bzw. Umbau in kürzerer Zeit ermöglicht.

Es ist ein weiteres Ziel der Erfindung, eine Förderanlage bereitzustellen, welche mit weniger Aufwand als bekannte Förderanlagen an individuelle Erfordernisse einer logistischen Aufgabenstellung angepasst werden kann. Im Rahmen dieser Aufgabe strebt die Erfindung insbesondere an, eine Förderanlage bereitzustellen, welche in einfacher Weise den Anschluss von unterschiedlichen Sensoren und von Fördermotoren unterschiedlicher Leistungsklasse ermöglicht. Des Weiteren strebt die Erfindung in diesem Rahmen danach, eine Förderanlage bereitzustellen, welche sowohl für logistische Aufgaben kleineren Umfangs eingesetzt werden kann als auch für logistische Aufgaben größeren Umfangs und die im Idealfall in einfacher Weise erweitert werden kann, um eine Förderanlage kleineren Umfangs zu einer Förderanlage größeren Umfangs auszurüsten.

Ein weiteres Ziel der Erfindung ist es, eine Förderanlage bereitzustellen, die sich sowohl für die Förderung und Lagerung schwerer Stückgüter eignet als auch für die Förderung und Lagerung leichter Stückgüter und dies insbesondere auch in Umgebungen, in denen an die Hygiene erhöhte oder höchste Anforderungen gestellt werden, wie beispielsweise im Bereich der Lebensmittettechnologie oder der Reinraumtechnik.

Diese und andere Ziele der Erfindung werden erfindungsgemäß bei einer Förderanlage der eingangs genannten Art erreicht, indem die Steuerungseinheit mit einer Busleitung verbunden ist, ein Fördermotor, vorzugsweise jeder Fördermotor mittels eines, vorzugsweise jeweils eines Modems mit der Busleitung verbunden ist, vorzugsweise elektrisch kontaktlos verbunden ist, und das/die Modem(s) ausgebildet ist/sind, um Energie zum Antrieb des Fördermotors und zumindest ein Datensignal zur Steuerung/Regelung des Fördermotors aus der Busleitung zu entnehmen und zum Fördermotor zu leiten.

Erfindungsgemäß wird eine neuartige Architektur für die Daten- und Signalleitung zwischen den Fördermotoren und einer einzigen, gegebenenfalls auch mehreren Steuerungseinheiten vorgeschlagen. Rückgrat dieser neuen Architektur ist eine Busleitung, welche von einer Mehrzahl von Fördermotoren dazu genutzt werden kann, um einerseits Daten oder Signale, beispielsweise über den Status des Fördermotors von dem Fördermotor an die Steuerungseinheit zu übersenden und/oder um Daten oder Signale von der Steuerungseinheit zu erhalten, die für die Steuerung/Regelung des Fördermotors erforderlich sind.

Grundsätzlich ist die Steuerungseinheit als Master ausgebildet und kann somit Daten versenden und empfangen. Die Modems können, je nach Art des Peripheriegerätes, weiches sie anschließen, als Slave, als nur empfangsberechtigte Knoten, oder als Master ausgeführt sein. Im letzten Falle ist die Busarchitektur als Multimaster-Bus ausgeführt und weist vorzugsweise eine dezentrale, ereignisabhängige Busvermittlung auf. Alternativ kann auch eine zentrale, beispielsweise getaktete Busvermittlung vorgesehen sein.

Die Busleitung ist hierbei typischerweise als serielle Busleitung ausgeführt, insbesondere als eine durch genau zwei elektrisch voneinander isolierte Leiter gebildete Datenleitung, zwischen denen eine Wechselspannung anliegt. Jegliche über diese Busleitung zu leitende Daten oder Signale können durch einen Modulationsvorgang in diese Wechselspannung einmoduliert werden, insbesondere, indem eine Frequenzmodulation der Wechselspannung erfolgt, oder durch Aufmodulation einer weiteren Wechselspannungsfrequenz auf die Wechselspannung übertragen werden. Die auf diese Weise in die Busleitung eingegebenen Daten oder Signale werden durch erfindungsgemäß vorgesehene Modems aus der Busleitung entnommen bzw. in diese eingespeist. Dieser Entnahme-/Einspeisungsvorgang kann insbesondere dadurch bewirkt werden, dass das Modem ausgebildet ist, um aus den in der Busleitung durch Modulation/Aufmodulation vorhandenen Wechselspannungsfrequenzen in bestimmter Weise kodierte Datensätze, die beispielsweise Steuerungs- oder Regelungssignale sein können, entnimmt. Dabei ist das Modem insbesondere auch dazu ausgebildet, um anhand eines Adressierungsblocks, welcher typischerweise zeitlich einem über die Modemleitung geleiteten Datenpaket vorangeht, durch entsprechende Dekodierung zu entnehmen, ob das Datenpaket für dasjenige Peripheriegerät, also insbesondere einen Fördermotor, bestimmt ist, der mittels des Modems mit der Busleitung verbunden ist. In entsprechender Weise versieht das Modem in die Busleitung eingespeiste Datenpakete mit einem solchen, den Absender identifizierenden Adressierungsblock. Ein Adressierungsblock kann eine Einzeladressierung darstellen, die lediglich ein isoliertes Peripheriegerät innerhalb der Förderanlage adressiert; oder kann eine Gruppenadressierung darstellen, die mehrere solcher Peripheriegeräte, beispielsweise mehrere, benachbart angeordnete Fördermotoren einer Förderstrecke, adressiert.

Mit dieser neuen Architektur stellt die erfindungsgemäße Förderanlage einen wesentlichen Vorteil gegenüber bekannten Förderanlagen bereit. Bei der erfindungsgemäßen Förderanlage kann durch diese Architektur darauf verzichtet werden, dass jeder Fördermotor durch eine einzelne Signalleitung direkt mit einer Steuerungseinheit verbunden wird, was den Verkabelungsaufwand bei Erstmontage und jeder Umrüstung der Fördernanlage erheblich reduziert und erleichtert. Denn statt einer solchen direkten Signalleitungsverbindung muss bei der erfindungsgemäßen Förderanlage jeder Fördermotor nur mittels einer kurzen Signalleitungsstrecke, die insbesondere durch ein Kabel, aber auch kabellos durch eine drahtlose Signalübertragung, wie beispielsweise eine Funkstrecke, erfolgen kann, mit der Busleitung verbunden sein.

Ein weiteres Merkmal der erfindungsgemäßen Förderanlage liegt darin, dass das Modem nicht nur ausgebildet ist, um zumindest ein Datensignal zur Steuerung/Regelung des Fördermotors aus der Busleitung zu entnehmen, sondern auch, um die für den Antrieb des Fördermotors benötigte Energie aus der Busleitung zu entnehmen und dem Fördermotor zuzuleiten. Hierdurch wird eine differenzierte Doppelnutzung der Busleitung erreicht, die den Verkabelungsaufwand von Förderanlagen entscheidend weiter verringert. Die für diesen Zweck erforderliche Energieleitung durch die Busleitung kann wiederum durch die zwei zuvor erwähnten elektrisch voneinander isolierten Leiter erfolgen. Auf diese beiden Leitern ist eine hochfrequente Wechselspannung aufgeprägt, die höher ist als die von den Fördermotoren als Antriebsenergie benötigte Spannung und die für die Fördermotoren als Energiequelle genutzt wird. Diese Wechselspannung kann in entsprechender Weise durch die Modems aus der Busleitung entnommen werden, hierbei oder nachfolgend innerhalb des Modems noch verändert werden, beispielsweise hinsichtlich ihrer Frequenz und/oder Spannung, insbesondere auch in eine Gleichspannung gleichgerichtet werden, um sie dann als Antriebsenergie zum Fördermotor zu leiten. Das Modem ist dabei insbesondere dazu ausgebildet, um diese Antriebsenergie des Fördermotors unabhängig von den Datensignalen bereitzustellen, die über die in der Busleitung geleiteten Datensignale ist.

Wenngleich die Busleitung vorstehend als vorzugsweise serielle Busleitung mit genau zwei voneinander elektrisch getrennte Leiter beinhaltend beschrieben worden ist, ist zu verstehen, dass die Busleitung auch mehr als zwei innerhalb der Busleitung elektrisch voneinander isoliert geführte Leitungsstränge umfassen kann und/oder als parallele Busleitung ausgeführt sein kann, um hierdurch höhere Bandbreiten und/oder Energiemengen leiten zu können. Bevorzugt ist es, die Busleitung als Ringleitung auszuführen, die aus zwei parallel verlaufenden Leitern besteht. Die beiden Leiter können insbesondere an einem Busleitungsende miteinander elektrisch verbunden sein und stellen in diesem Fall einen Hin- und einen Rückleiter dar.

Erfindungsgemäß ist vorzugsweise vorgesehen, dass zwei oder mehrere, insbesondere alle innerhalb der Förderanlage vorgesehenen Fördermotoren an die Busleitung mittels jeweils eines Modems für jeden Fördermotor angeschlossen sind und diese Vielzahl von Fördermotoren von einer einzigen Steuerungseinheit aus gesteuert/geregelt werden. Hierdurch wird eine zentralisierte Busarchitektur vorgeschlagen, die sowohl hinsichtlich der Energieverteilung, als auch hinsichtlich der Datenleitung besonders vorteilhaft ist. Es ist zu verstehen, dass diese bevorzugt vorgesehene Architektur nicht ausschließt, dass bei spezifischen Anforderungen an Förderanlagen oder bei Überschreitung bestimmter Größenordnungen der Förderanlage auch andere Architekturen vorgesehen werden. Diese anderen Architekturen können einerseits darin bestehen, dass einzelne Peripheriegeräte, beispielsweise spezifische Sensoren, Aktuatoren oder Fördermotoren nicht über die Busleitung mit der Steuerungseinheit verbunden sind, sondern in anderer Weise, insbesondere in konventioneller Weise durch direkte Anbindung mittels einer separaten Energieleitung und Datenleitung. Dies kann insbesondere dann erforderlich sein, wenn sich das Peripheriegerät aufgrund einer spezifischen Eigenschaft nicht dafür eignet, mittels eines Modems mit der Busleitung verbunden zu werden. Weiterhin schließt diese bevorzugte Architekturausgestaltung nicht aus, dass in anderen Ausgestaltungen der erfindungsgemäßen Förderanlage mehr als eine Steuerungseinheit vorgesehen ist. So kann beispielsweise eine Förderanlage in zwei Förderanlagenbereiche aufgeteilt werden und für jeden Förderanlagenbereich eine einzelne Steuerungseinheit bereitgestellt sein. Es können auch entsprechend mehrere solcher Förderanlagenbereiche mit jeweils einer Steuerungseinheit vorgesehen sein.

Alternativ oder zusätzlich hierzu können auch für einen Förderänlagenbereich bzw. eine Förderanlage zwei Steuerungseinheiten vorgesehen sein, die unterschiedliche Steuerungstätigkeiten ausführen, beispielsweise eine spezifische Steuerungseinheit für eine Bereitstellung einer Kollisionssicherheit zwischen einzelnen Stückgütern und eine Steuerungseinheit, welche dazu ausgebildet ist, um die Förderung der Stückgüter von einer Ausgangsadresse zu einer Zieladresse zu bewirken. Insbesondere ist es aber bevorzugt, wenn alle Logikfunktionen (also insbesondere alle Steuer- und Regelfunktionen in einer einzigen Steuerungseinheit zusammengefasst sind und etwaige weitere Steuerungseinheiten lediglich dazu dienen, um Energie in die Busleitung einzuspeisen und hierdurch Energieverbrauch und Leitungsverluste zu minimieren bzw. die erforderlichen Leitungsquerschnitte zu reduzieren. Beide bzw. alle Steuerungseinheiten können in diesem Falle ein und dieselbe Busleitung zum Datentransfer nutzen. Auf diese Weise kann ein modularer Aufbau der Förderanlage auch hinsichtlich ihrer Eigenschaften erreicht werden, der die Anpassung der Förderanlage an jeweils individuelle Bedürfnisse erleichtert.

Die erfindungsgemäße Busleitung wird vorzugsweise mit einer mittel- oder hochfrequenten Wechselspannung, also insbesondere einer Wechselspannung von mehr als 1kHz, vorzugsweise mehr als 10kHz und insbesondere einer Wechselspannung von 25kHz beaufschlagt. Die Spitzenspannung in der Busleitung beträgt dabei vorzugsweise mehr als die Versorgungsspannung der über die Busleitung zu versorgenden Verbraucher und liegt insbesondere eine oder zwei größenordnungen oberhalb dieser Versorgungsspannüng.

Gemäß einer ersten bevorzugten Ausführungsform kann die erfindungsgemäße Förderanlage fortgebildet werden durch zumindest einen Sensor zur Erfassung von Stückgut in einem Bereich der Förderanlage, der zur Übersendung der Sensordaten mit der Steuerungseinheit über ein Modem verbunden ist, welches ausgebildet ist, um zumindest ein Sensorsignal in eine in der Busleitung anliegende Wechselspannung einzukoppeln oder auf diese Wechselspannung aufzumodulieren.

Bei dieser Fortbildung ist ein Sensor zur Erfassung von Stückgut in einem bestimmten Bereich der Förderanlage bereitgestellt. Dieser Sensor ist in gleicher Weise wie die zuvor erläuterten Fördermotoren mittels eines Modems mit der Busleitung verbunden und leitet seine Sensorsignale über die Busleitung an die Steuerungseinheit. Der Sensor kann hierbei insbesondere auch eine für die Funktion des Sensors benötigte Speisespannung oder andere Formen der Energie aus der Busleitung beziehen. Insbesondere ist vorgesehen, dass der Sensor ausschließlich über das Modem mit der Busleitung verbunden ist und keine weiteren Daten- oder Energieleitungen erforderlich sind, um den Sensor zu betreiben. Unter einem Sensor ist hierbei insbesondere ein Sensor zu verstehen, der ein binäres Signal in Form einer Bejahung oder Verneinung des Vorhandenseins eines Stückguts in einem bestimmten Bereich der Förderanlage bereitstellt. Als Sensor ist weiterhin zu verstehen Mess- oder eine Leseeinheit, welche Eigenschaften oder Kennungen von Stückgütern erfassen kann, wie beispielsweise das Gewicht eines Stückguts, bestimmte Abmessungen des Stückguts, oder eine am Stückgut angeordnete Kennung, welche das Stückgut individuell kennzeichnet und eine Identifizierung des Stückguts ermöglicht.

Diese Ausgestaltung kann weiter fortgebildet werden, indem zumindest eines der Modems, vorzugsweise alle Modems, ausgebildet ist/sind, um die Energie zum Antrieb und zumindest ein Datensignal zur Steuerung/Regelung des Fördermotors aus der Busleitung zu entnehmen und um zumindest ein Sensorsignal, vorzugsweise mehrere Sensorsignale in eine in der Busleitung anliegende Wechselspannung einzukoppeln oder auf diese Wechselspannung aufzumodulieren.

Bei dieser bevorzugten Ausführungsform ist ein Modem, welches zum Anschluss eines Fördermotors an die Busleitung dient, weiterhin dazu ausgebildet, um auch einen Sensor, vorzugsweise zwei oder mehrere Sensoren, an die Busleitung anzuschließen. Dieses solcherart multifunktional ausgestaltete Modem stellt insbesondere den Vorteil bereit, dass Peripheriegeräte mit Funktionen, die in einem lokal begrenzten Bereich einer Förderanlage typischerweise kombiniert auftreten, über ein einziges Modem mit der Busleitung verbunden werden können und hierdurch eine kostengünstige und effiziente Architektur ermöglicht wird, um diese Funktionen in dem lokal begrenzten Bereich zu erreichen.

Es ist weiterhin bevorzugt, dass die Busleitung als serielle Busleitung ausgeführt ist und insbesondere zwei voneinander elektrisch isolierte Leitungsstränge umfasst, über welche den Fördermotoren die Antriebsenergie zugeleitet werden kann, und dass ein Modem zum Anschluss eines Fördermotors an die Busleitung ausgebildet ist, um aus den zwei elektrisch voneinander isolierten Leitungssträngen die für den Fördermotor benötigte Antriebsenergie durch induktive Ankopplung an eine in den Leitungssträngen anliegende Wechselspannung zu entnehmen und die für die Steuerung und/oder Regelung des Fördermotors erforderlichen, auf oder in die Wechselspannung in den Leitungssträngen ein- bzw. aufmodulierte Signale auszulesen.

Mit dieser Art der Ausgestaltung der Busleitung und der jeweiligen Modems wird eine besonders zuverlässige und effiziente Energie- und Datenübertragung verwirklicht, die sich insbesondere auch elektrisch kontaktlos ausführen lässt, was Montage- und Umrüstvorgänge an der Förderanlage erheblich vereinfacht.

Gemäß einer weiteren bevorzugten Ausführungsform ist vorgesehen, dass in einem Modem, welches einen elektronisch kommutierten Fördermotor mit der Busleitung verbindet, eine Kommutierungs- und Steuereinheit bereitgestellt ist, welche ausgebildet ist, um aus einem vom Fördermotör empfangenen Drehwinkelsignal und gfs. aus der Busleitung ausgelesenen Steuersignalen für den Fördermotor Signale für die Kommutierung des Fördermotors zu erzeugen und dass das Modem ausgebildet ist, um Statussignale, welche einen Betriebszustand des Fördermotors, insbesondere dessen Drehzahl und/oder Lastzustand charakterisieren, in die Busleitung einzuspeisen. Gemäß dieser Ausgestaltung ist die Kommutierungssteuerung für einen elektronisch kommutierten Fördermotor innerhalb des Modems angeordnet, was eine vorteilhafte Bündelung von allen logischen und steuerungstechnischen Vorgängen innerhalb der Datenleitungsarchitektur bewirkt. Zwischen Modem und Fördermotor werden in diesem Fall die für die Kommutierungssteuerung erforderlichen Signale ausgetauscht, d.h. insbesondere ein Drehwinkelsignal vom Fördermotor empfangen und entsprechende Kommutierungsignale an den Fördermotor gesendet. Aus der innerhalb des Modems angeordneten Kommutierungssteuereinheit können dann insbesondere auch Statussignale, welche den Betriebszustand des Fördermotors beschreiben, abgeleitet und über die Busleitung an die Steuerungseinheit gesendet werden. Diese Statussignale können in der einfachsten Ausgestaltung binär lediglich beschreiben, ob der Fördermotor sich bewegt oder sich nicht bewegt, können aber insbesondere auch detaillierte Informationen, wie beispielsweise die Drehzahl oder auch die Winkellage des Fördermotors beinhalten. Es ist zu verstehen, das diese Ausgestaltung auch Ausführungsformen beinhaltet, bei denen innerhalb eines Modems eine universale, an unterschiedliche Arten von Fördermotoren sich anpassende oder anpassbare Kommutierungssteuereinheit bereitgestellt ist, die solcherart ausgebildet ist, dass sie anhand einer vom Fördermotor ausgesendeten Kennung oder anhand von manuell in das Modem eingegebenen Kennungsdaten die Kommutierungssteuerung an den jeweiligen Fördermotor anpasst, beispielsweise abhängig von der Anzahl der Pole des Fördermotors oder dergleichen.

Alternativ zur vorgenannten Ausführungsform kann die erfindungsgemäße Förderanlage auch fortgebildet werden, indem der Fördermotor elektronisch kommutiert ist, jedem Motor eine Kommutierungssteuerung zugeordnet und unmittelbar am Fördermotor angeordnet ist, die aus der Steuerungseinheit ein Geschwindigkeitssignal empfängt und das Modem ausgebildet ist, um das Geschwindigkeitssignal aus der Busleitung auszulesen und der Kommutierungssteuerung zuzuleiten. Bei dieser Ausgestaltung ist die Kommutierungssteuerung im unmittelbaren Bereich des Motors angeordnet und für die Kommutierungssteuerung relevante Daten, wie beispielsweise das Drehwinkelsignal, müssen nicht zum Zweck der Kommutierungssteuerung an das Modem gesendet werden, sondern können unmittelbar innerhalb des Fördermotors an die Kommutierungssteuerung gesendet werden, dort verarbeitet und in Kommutierungssignale umgesetzt werden. Es ist zu verstehen, dass, während an einem einzelnen Fördermotor entweder diese Art der Kommutierungssteuerung am Motor oder die vorgenannte Art der Kommutierungssteuerung im Modem bereitgestellt sein kann, innerhalb der erfindungsgemäßen Förderanlage auch beide Arten der Kommutierungssteuerung für unterschiedliche Fördermotoren vorhanden sein kann, indem ein erster Fördermotor mittels der innerhalb des Modems angeordneten Kommutierungs-Steuereinheit gesteuert wird und ein zweiter Fördermotor mittels einer am Fördermotor angeordneten Kommutierungs-Steuerungseinheit gesteuert wird, dessen Modem dann keine solche Kommutierungs-Steuereinheit aufweist und auch für eine entsprechend unterschiedliche Daten- und Signalleitung zwischen Modem und Fördermotor ausgebildet ist.

Die erfindüngsgemäße Förderanlage kann weiterhin fortgebildet werden durch ein konfigurierbares Modem, welches einen Kopplungsteil, der ausgebildet ist, um Energie und Signale aus der Busleitung auszulesen und Signale in die Busleitung einzuspeisen und einen konfigurierbaren Anschlussteil aufweist, der dazu konfigurierbar ist, um die Energie und/oder die Signale an einen Verbraucher oder Sensor in die von diesem benötigte Form zu bringen. Ein solches konfigurierbares Modem dient insbesondere dazu, um einen Verbraucher oder Sensor, also ein beliebiges Peripheriegerät, welches Daten innerhalb der Förderanlage erfasst oder eine Stückgutförderung oder -leitung innerhalb der Förderanlage bewirkt, in die Förderanlage zu integrierten. Aufgrund der Vielzahl von solchen Peripheriegeräten und deren teilweise unterschiedlichen Aufgaben und Bauweisen ist es insbesondere vorteilhaft, wenn ein solches konfigurierbares Modem beispielsweise hinsichtlich der Spannungshöhe, die zum Betrieb des Peripheriegeräts aus der Busleitung entnommen wird, an das Peripheriegerät angepasst werden kann. In vielen Anwendungsfällen ist es alternativ oder zusätzlich vorteilhaft, wenn auch die dem Peripheriegerät zugesendeten Signale konfiguriert werden können, um diese an beispielsweise einen vom Peripheriegerät vorgesehenen Spannungsbereich anpassen zu können und/oder um vom Peripheriegerät empfangene Signale auch dann umsetzen und in die Busleitung einspeisen zu können, wenn diese einen bestimmten Spannungsbereich aufweisen, der von üblichen Spannungsbereichen abweicht. Die Konfiguration des Modems kann hierbei durch manuellen Eingriff am Modem selbst erfolgen. Sie kann aber auch in automatisierter Form erfolgen, indem das Modem anhand einer vom Peripheriegerät ausgehenden Kennung erkennt, in welcher Weise es konfiguriert sein muss, um mit diesem Peripheriegerät zu kommunizieren und erkennt, in welcher Form dieses Peripheriegerät Energie benötigt und das Modem dann sich selbst anhand dieser Kennung konfiguriert.

Dabei ist es weiterhin bevorzugt, wenn das konfigurierbare Modem ausgebildet ist, um aus der Busleitung elektrische Energie zu entnehmen und ein Stellglied aufweist, um die Spannung dieser elektrischen Energie einzustellen und/oder dass das konfigurierbare Modem ausgebildet ist, um aus der Busleitung ein Datensignal zu entnehmen und ein Stellglied aufweist, um den Spannungsbereich und/oder Frequenzbereich dieses Datensignals einzustellen. Das solcherart fortgebildete konfigurierbare Modem eignet sich insbesondere dazu, um an die Bedürfnisse unterschiedlicher Peripheriegeräte angepasst zu werden und diese in die Förderanlage zu integrieren. Insbesondere ist das solcherart fortgebildete konfigurierbare Modem dafür geeignet, um Peripheriegeräte nach dem Stand der Technik an die erfindungsgemäße Förderanlage anzuschließen und hierbei die erfindungsgemäßen Vorteile zu realisieren, ohne dass am Peripheriegerät selbst Modifikationen vorgenommen werden müssen.

Noch weiter ist es bevorzugt, wenn das konfigurierbare Modem induktiv an die Busleitung angeschlossen ist zur Übertragung der Antriebsenergie des Fördermotors und die wirksame Kopplungslänge der induktiven Ankopplung veränderbar ist, um die Spannung der aus der Busleitung induktiv übertragenen Antriebsenergie einzustellen. Mit dieser Fortbildung wird eine besonders zuverlässige Anschlussweise des konfigurierbaren Modems an die Busleitung bereitgestellt und eine bei dieser Art des Anschlusses vorteilhafte Ausgestaltung vorgesehen, um die Spannung der aus der Busleitung induktiv übertragenen Antriebsenergie hinsichtlich ihrer Spannuhgshöhe einzustellen.

Gemäß einer weiteren bevorzugten Ausführungsform ist vorgesehen, dass die Modems induktiv an die Busleitung angeschlossen sind zur Übertragung der Antriebsenergie des Fördermotors und die induktive Ankopplung eines ersten Modems zur Übertragung einer elektrischen Antriebsenergie mit einer ersten Spannung und die induktive Ankopplung eines zweiten Modems zur Übertragung einer elektrischen Antriebsenergie mit einer zweiten, von der ersten verschiedenen Spannung ausgebildet ist. Diese bevorzugte Ausführungsform der Erfindung ermöglicht es, innerhalb einer Förderanlage Fördermotoren unterschiedlicher Leistungsstärke und unterschiedlicher Nennspannung zu betreiben und hierbei die unterschiedlichen Fördermotoren über eine einzige Busleitung, und insbesondere eine einzige serielle Busleitung mit genau zwei darin enthaltenen, elektrisch voneinander getrennten Leitungssträngen mit der jeweils benötigten Antriebsenergie zu versorgen.

Gemäß einer weiteren bevorzugten Ausführungsform sind zumindest zwei, vorzugsweise mehrere Steuerungseinheiten bereitgestellt sind, die jeweils über eine eigene Busleitung mit mehreren Fördermotoren verbunden sind und die untereinander zur Steuerung der Förderanlage mittels einer Steuerdatenleitung verbunden. Gemäß dieser Fortbildung kann die erfindungsgemäße Förderanlage in mehrere Förderanlagenbereiche aufgeteilt werden, die jeweils von einer Steuerungseinheit gesteuert/geregelt werden. Die mehreren Förderanlagenbereiche koordinieren hierbei die Förderung von Stückgütern von einem Förderanlagenbereich in einen anderen Förderanlagenbereich über eine Kommunikation der jeweiligen Steuerungseinheiten untereinander über die Steuerdatenleitung. Grundsätzlich kann die Steuerdatenleitung hierbei eine separate Datenleitung sein oder sie kann in Form der Busleitung ausgeführt sein, die in diesem Fall durch mehrere Steuerungseinheiten geführt ist. In diesem Fall ist neben der individuellen Adressierung der einzelnen Fördermotoren und eventueller weiterer Peripheriegeräte auch eine Zuordnung einer Gruppe von Peripheriegeräten zu jeweils einer Steuerungseinheit erforderlich, um den Betrieb der Förderanlage durchzuführen.

Diese Ausführungsform kann weiter fortgebildet werden, indem die zumindest zwei, vorzugsweise mehreren Steuerungseinheiten ausgebildet sind, um über die Steuerdatenleitung Signale auszutauschen, welche ein Stückgut betreffen, das von einem durch eine erste Steuerungseinheit gesteuerten Bereich der Förderanlage in einen von einer zweiten Steuerungseinheit der Förderanlage gesteuerten Bereich gefördert wird. Mit dieser Fortbildung wird eine sichere Überleitung eines Stückguts von einem ersten Förderanlagenbereich, der durch die erste Steuerungseinheit gesteuert wird, in einen zweiten Förderanlagenbereich, der durch die zweite Steuerungseinheit gesteuert wird, erreicht und zugleich eine für die schnelle Verarbeitung von Steuerungsdaten besonders günstige Aufteilung der Steuerungsvorgänge auf die zwei Steuerungseinheiten erzielt.

Gemäß einer weiteren bevorzugten Ausführungsform ist eine zentrale Förderanlagensteuerung vorgesehen, welche mit der/den Steuerungseinheit(en) über Datenleitungen verbunden ist und ausgebildet ist, um die Steuerungseinheit(en) so anzusteuern, dass bestimmte Stückgüter von einer Ausgangsadresse zu einer Zieladresse gefördert werden, insbesondere von einer Ausgangsadresse, die in einem von einer ersten Steuerungseinheit gesteuerten Bereich der Förderanlage liegt zu einer Zieladresse, die in einem von einer zweiten Steuerungseinheit gesteuerten Bereich der Förderanlage liegt. Eine solche zentrale Förderanlagensteuerung verarbeitet - im Gegensatz zu den zuvor erläuterten Steuerungseinheiten - keine unmittelbar von den Peripheriegeräten erhaltenen Signale, sondern Daten, welche von den Steuerungseinheiten aus diesen unmittelbar zugesendeten Signalen generiert werden. Die zentrale Förderanlagensteuerung dient dazu, logistische Kennwerte der Förderanlage zu ermitteln und einem Benutzer bereitzustellen. Solche logistischen Kennwerte sind beispielsweise die Zuordnung des aktuellen Ortes zu jedem bestimmten, in der Förderanlage befindlichen Stückgut, die Identifizierung einzelner Stückgüter, die sich an einem bestimmten Ort befinden, die Signalisierung von Fehlerzuständen, wie beispielsweise Förderblockaden, und aus diesen Daten weiter aufbereitete Kennwerte, wie beispielsweise die Anzahl der innerhalb der Förderanlage vorhandenen oder in einem bestimmten Speicherbereich der Förderanlage vorhandenen Stückgüter eines bestimmten Typs oder ein beispielsweise bei zur Lagerhaltung eingesetzten Förderanlagen häufig sinnvoller Soll-Ist-Vergleich bezüglich der Anzahl der vorgesehenen und der vorhandenen Stückgüter eines bestimmten Typs innerhalb der Förderanlage. Die zentrale Förderanlagensteuerung kann bei Vorhandensein mehrerer Steuerungseinheiten auch die Funktion des Signalaustausches zwischen den mehreren Steuerungseinheiten übernehmen, um hierdurch die Koordination unterschiedlicher Förderanlagenbereiche, die jeweils durch unterschiedliche Steuerungseinheiten gesteuert werden, zu übernehmen. In diesem Fall kann bei Bereitstellung mehrerer Steuerungseinheiten auf einen direkten Signalaustausch zwischen diesen Steuerungseinheitenverzichtet werden und stattdessen eine sternförmige Signalleitungsstruktur vorgesehen sein, deren Mittelpunkt die zentrale Förderanlagensteuerung ist.

Gemäß einer weiteren bevorzugten Ausführungsform weisen zumindest ein Modem, vorzugsweise mehrere Modems eine Schnittstelle, insbesondere eine standardisierte Schnittstelle auf, welche dazu ausgebildet ist, um Daten und/oder Energie auszugeben, welche von dem Modem aus der Busieitung ausgelesen werden/entnommen wird oder welche von einem externen Sensor oder einem in einen Fördermotor integrierten Sensor zum Modem geleitet werden. Eine solche standardisierte Schnittstelle, wie beispielsweise eine RS232 oder ein RS485-Anschluss, kann einerseits dazu dienen, um das Modem mit einem Peripheriegerät zu verbinden und hierbei sowohl die Energieübertragung als auch die Datenübertragung zu realisieren. In einem solchen Fall kann, bei entsprechender Ausbildung der Peripheriegeräte, wie beispielsweise Sensoren öder Aktuatoren, ein standardisiertes Modem bereitgestellt sein, welches eine Vielzahl unterschiedlicher Peripheriegeräte über eine standardisierte Schnittstelle an die Steuerungseinheit der Förderanlage anschließt. In diesem Fall kann insbesondere die standardisierte Schnittstelle neben der Ankopplung an die Busleitung die einzige Anschlussstelle des Modems sein, da hierdurch die prinzipiellen Grundaufgäben des Modems realisiert werden. Die standardisierte Schnittstelle kann aber auch zusätzlich zu den zuvor erläuterten Funktionen des Modems bereitgestellt sein. In diesem Fall ermöglicht die standardisierte Schnittstelle den Anschluss eines oder mehrerer weiterer Peripheriegeräte an das Modem. Beispielsweise kann in einer solchen Ausgestaltung ein Modem, welches über eine erste Verbindungsstelle mit einem Fördermotor verbunden ist, um diesen über die Busleitung mit der Steuerungseinheit zu verbinden, über eine oder mehrere zusätzlich vorgesehene standardisierte Schnittstellen Sensoren an das Modem angeschlossen werden, die mittels des Modems ebenfalls über die Busleitung mit der Steuerungseinheit verbunden werden und über das Modem gegebenenfalls Energie erhalten. Gemäß einer dritten Funktionalität kann die standardisierte Schnittstelle insbesondere auch dazu dienen, um den Status des Modems und dessen Funktion bzw. die Funktion der Busleitung im Bereich zwischen Steuerungseinheit und Modem zu überprüfen. Diese Funktionalität kann insbesondere dazu dienen, um im Zuge des Aufbaus oder Umbaus einer Förderanlage die Gesamtfunktion zu überprüfen, oder um bei Auftreten eines Fehlers innerhalb der Förderanlage die Ursache des Fehlers in kurzer Zeit zu finden, indem an die standardisierte Schnittstelle ein Analysegerät angeschlossen wird.

Gemäß einer weiteren bevorzugten Ausführungsform weisen zumindest ein Modem, vorzugsweise mehrere Modems einen Kanal auf, um einen der beiden Leitungsstränge als Primärleiter aufzunehmen, und im Bereich neben oder um diesen Kanal zumindest eine Sekundärspule innerhalb des Modems, die elektromagnetisch oder induktiv mit dem Primärleiter gekoppelt ist. Diese Ausgestaltung des/der Modem(s) eignet sich insbesondere gut für eine elektrisch kontaktlose, d.h. ohne direkten elektrisch leitenden Kontakt erfolgende Daten- und Energieübertragung zwischen dem Modem und der Busleitung. Eine solche Ausgestaltung erleichtert einerseits den Auf- und Umbau, da auf eine Abisolierung der Leitungsstränge innerhalb der Busleitung bei Einbau eines Modems verzichtet werden kann und eine Neuisolierung bei Ausbau eines Modems nicht erforderlich wird. Zudem kann mit dieser Fortbildung die Montage eines Modems an die Busleitung ohne Werkzeug erfolgen, was für die Geschwindigkeit eines Aufbaus und Umbaus vorteilhaft ist. Grundsätzlich kann bei einer Vielzahl von Anwendungen eine ausreichend sichere und leistungsstarke Energie- und Datenübertragung erreicht werden, wenn nur einer der beiden Leitungsstränge innerhalb des Kanals aufgenommen wird, der eine elektromagnetische oder induktive Kopplung an die Sekundärspule innerhalb des Modems ermöglicht und auch die durch eine solche Ankopplung ermöglichte Energieübertragung ist oftmals ausreichend.

In wenigen spezifischen Anwendungsfällen kann es vorteilhaft sein, beide Leitungsstränge der Busleitung in getrennten Kanälen innerhalb des Modems aufzunehmen und miteiner Sekundärspule oder zweier entsprechend verschalteter separater Sekundärspulen elektromagnetisch oder induktiv zu koppeln, um hierdurch eine höhere Energieübertragung zu ermöglichen.

Dabei ist es insbesondere vorgesehen, dass der Kanal bzw. die Kanäle durch jeweils einen nach zumindest einer Seite offenen Ferritkern gebildet wird/werden, um den in zumindest jeweils einem Bereich eine Sekundärwicklung zur Ausbildung der jeweiligen Sekundärspule gewickelt ist. Diese Ausgestaltung hat sich als besonders effizient zur Übertragung von sowohl Energie wie auch Daten erwiesen und ermöglicht eine sichere, d.h. fehlerfreie Datenübertragung.

Ein weiterer Aspekt der Erfindung ist eine Energieversorgungs- und Datenübermittlungseinrichtung für eine Förderanlage nach einem der vorhergehenden Ansprüche, umfassend:
- eine vorzugsweise serielle Busleitung umfassend, insbesondere bestehend aus zwei vorzugsweise linearen Leitungssträngen,
- zumindest eine Steuerungseinheit die zur Übersendung von Daten mit der Busleitung verbunden ist,
- eine Mehrzahl von Modems,
   o die vorzugsweise kontaktlos mit der Busleitung verbindbar sind, zum elektrische Energie aus der Busleitung zu entnehmen, Daten aus der Busleitung auszulesen und vorzugsweise weiterhin in eine in der Busleitung anliegende Wechselspannung Daten einzumodulieren oder auf diese Wechselspannung aufzumodulieren und
   o die eine Schnittstelle zur Verbindung mit einem externen Verbrauchter, insbesondere einem Fördermotor öder einem Aktuator und/oder einem externen Sensor aufweisen.

Die erfindungsgemäße Energieversorgungs- und Datenübermittlungseinrichtung stellt eine verbesserte Energieversorgung und Datenübermittlung in einer Förderanlage bereit, die sich insbesondere für den Einsatz in einer Förderanlage eignet, wie sie zuvor beschrieben wurde und die alle zuvor beschriebenen Vorteile in einer solchen Förderanlage ermöglicht.

Die erfindungsgemäße Energieversorgungs- und Datenübermittlungseinrichtung kann insbesondere dadurch fortgebildet werden, dass die darin vorgesehene(n) Steuerungseinheit(en), eines oder mehrere der darin vorgesehenen Modems und/oder die darin vorgesehene Busleitung solcherart fortgebildet ist/sind, wie es zuvor in Bezug auf die Förderanlage beschrieben wurde, um hierdurch die zuvor beschriebenen Wirkungen und Vorteile zu erzielen.

Ein weiterer Aspekt der Erfindung ist ein Verfahren zur Förderung von Stückgütern, mit den Schritten
- Anlegen einer elektrischen Wechselspannung an einen Primärleiter,
- Ein- oder Aufmodulieren eines Datensignals in/auf die elektrische Wechselspannung,
- Induktive Übertragung der elektrischen Wechselspannung auf eine Sekundärwicklung in einem Modem und Leiten des in der Sekundärwicklung erzeugten Stromes zu einem Fördermotor zum Antreiben des Fördermotors,
- Auslesen des Datensignals aus dem Primärleiter in dem Modem und Leiten des ausgelesenen Datensignals zum Fördermotor zum Steuern und/oder Regeln des Fördermotors,
- Fördern des Stückgutes mit dem Fördermotor.

Mit diesem erfindungsgemäßen Verfahren wird ein effizienter und zugleich sicherer und im Hinblick auf den Anschluss und die Montage eines Fördermotors einfacher Einsatz und Betrieb eines Fördermotors innerhalb einer Förderanlage ermöglicht..Das Verfahren kann insbesondere innerhalb einer Förderanlage der zuvor beschriebenen Bauweise ausgeführt werden und ermöglicht in diesem Falle, den Fördermotor sowohl mit Energie als auch mit den für seinen Betrieb erforderlichen Steuerungs- und Regelsignalen zu versorgen, ohne dass hierfür eine aufwendige Energie- und Datenleitung über mehrere Leitungen erforderlich wäre.

Das Verfahren kann dabei insbesondere fortgebildet werden, indem es weiterhin die Schritte umfasst:
- Erfassen einer Position des Stückgutes und/oder eines Merkmals des Stückgutes mit einem Sensor,
- Leiten des Sensorsignals zu einem Modem, insbesondere zu dem Modem, welches zur Entnahme der Antriebsenergie für den Fördermotor ausgebildet ist,
- Aufmodulieren des Sensorsignals auf die in der Busleitung anliegende Wechselspannung in dem Modem,
- Auslesen des Sensorsignals aus der Busleitung in der Steuerungseinheit und
- Bestimmen des Datensignals zur Steuerung/Regelung des Fördermotors in Abhängigkeit von dem Sensorsignal in der Steuerungseinheit.

Mit dieser Fortbildung wird neben dem effizienten und sicheren Betrieb eines Fördermotors zusätzlich eine effiziente und sichere Erfassung der Position eines Stückgutes mittels eines Sensors ermöglicht und diese Position oder das Merkmal des Stückguts in sicherer und effizienter Weise zu einer Steuerungseinheit in Form von Daten, welche die Position/das Merkmal beschreiben, geleitet. Dabei kann es sich bei dem Modem, welches die Daten über die Position/das Merkmal auf die Busleitung aufmoduliert, um ein separates Modem handeln, oder um ein Modem, welches einen Fördermotor mit der Busleitung verbindet. Diese Verfahrensfortbildung eignet sich insbesondere dafür, mit einer Förderanlage betrieben zu werden, die gemäß den zuvor beschriebenen bevorzugten Ausführungsformen mit einer Sensorankopplung oder einer standardisierten Schnittstelle ausgeführt ist.

Bevorzugte Ausführungsformen der Erfindung werden anhand der beiliegenden Figuren beschrieben. Es zeigen:
- Fig. 1: eine schematische Darstellung einer ersten Ausführungsform der erfindungsgemäßen Förderanlage,
- Fig. 2: eine schematische Darstellung einer zweiten Ausführungsform der erfindungsgemäßen Förderanlage,
- Fig. 3: eine quergeschnittene Ansicht einer Busleitung der erfindungsgemäßen Förderanlage,
- Fig. 4: eine schematische Ansicht eines Modems, welches an eine Busleitung angekoppelt ist und einen Fördermotor und einen Sensor an die Busleitung anschließt,
- Fig. 5: eine schematische Darstellung einer zweiten Ausführungsform eines Modems, welches an eine Busleitung angekoppelt ist und einen Fördermotor und einen Sensor an diese Busleitung ankuppelt,
- Fig. 6: eine schematische Darstellung einer dritten Ausführungsform eines Modems, welches an eine Busleitung angekoppelt ist und einen Fördermotor und zwei Sensoren an die Busleitung ankoppelt,
- Fig. 7: eine schematische Darstellung einer dritten Ausführungsform einer erfindungsgemäßen Förderanlage, und
- Fig. 8: eine schematische Darstellung der Anordnung der erfindungsgemäßen Busleitung an einem Förderprofil einer erfindungsgemäßen Förderanlage.

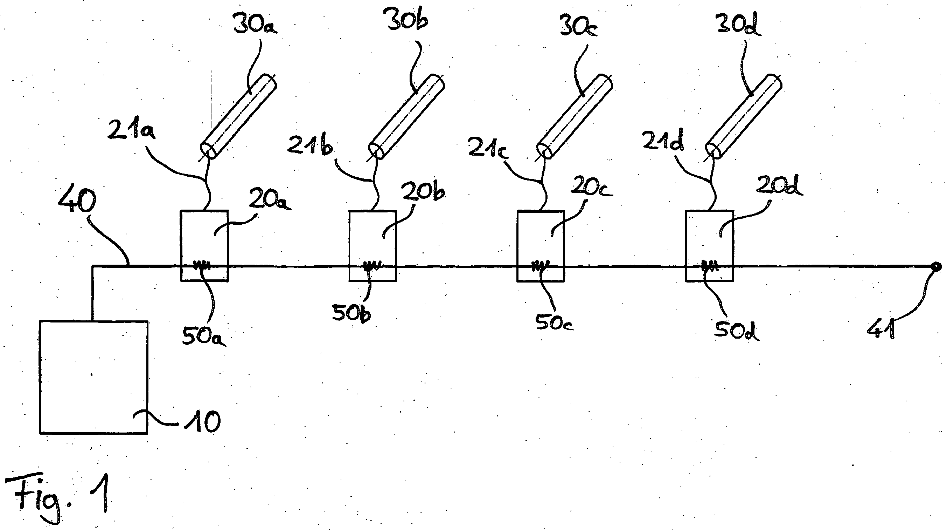

Wie aus Fig. 1 zu erkennen ist, umfasst eine erste Ausführungsform der erfindungsgemäßen Förderanlage eine Steuerungseinheit 10 und eine Mehrzahl von Modems 20a-d. Jedes Modem 20a-d ist mittels einer zur Daten- und Energieübertragung ausgebildeten mehradrigen Leitung 21a-d mit einem Fördermotor 30a-d verbunden.

Ausgehend von der Steuerungseinheit 10 verläuft eine serielle Busleitung 40 entlang der Modems 20a-d und hat ein definiert geschlossenes Ende 41. Die Busleitung 40 ist mit jedem der Modems 20a-d elektrisch kontaktlos über Kopplungsstrecken 50a-d gekoppelt.

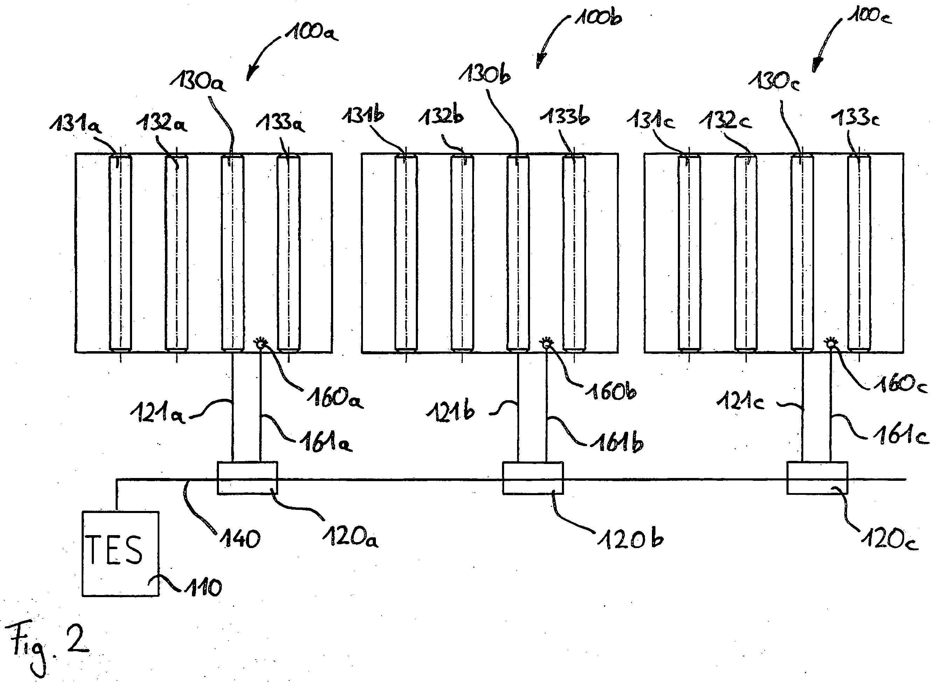

Fig. 2 zeigt eine Ausführungsform der Erfindung, welche eine Mehrzahl von Fördereinheiten 100a-c aufweist. Jede Fördereinheit 100a-c weist einen Fördermotor auf, der als Förderrolle mit integriertem Antriebsmotor 130a-c ausgebildet ist. Weiterhin umfasst jede Fördereinheit 100a-c eine Mehrzahl von Förderrollen 131-133a-c, welche dazu dienen, das Gewicht von Stückgütern, welche über die Fördereinheiten 100a-c gefördert werden sollen, aufzunehmen und eine leichte Beweglichkeit dieser Stückgüter entlang der Fördereinheiten zu ermöglichen.

Jeder Fördermotor 130a-c ist wiederum mittels einer Energie- und Datenleitung 121a-c mit jeweils einem Modem 120a-c verbunden, welches wiederum mit einer Busleitung 140 per induktiver Ankopplung verbunden ist.

Jede Fördereinheit 100a-c weist weiterhin einen Sensor 160a-c auf, der mittels einer Energie- und Datenleitung 161a-c mit dem Modem 120a-c verbunden ist.

Über die Ankopplung des Modems 120a-c an die Busleitung 140 wird sowohl die Energie als auch die Daten übertragen, welche zum Betrieb und zur Steuerung der Fördermotoren 130a-c und der Sensoren 160a-c erforderlich sind. D.h., über die Ankopplung der Modems 120a-c an die Busleitung 140 wird sowohl eine Signalübertragung von der Steuerungseinheit 110 zu dem Fördermotor und gegebenenfalls auch dem Sensor 160a-c verwirklicht als auch eine Signalübertragung in umgekehrter Richtung, um Statussignale des Fördermotors und Sensorsignale des Sensors 160a-c an die Steuerungseinheit 110 zu übermitteln.

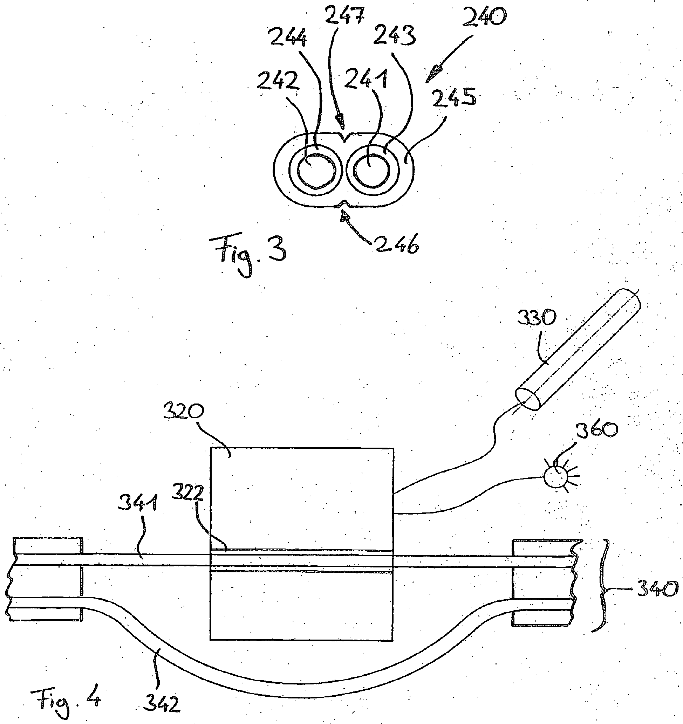

Fig. 3.zeigt eine Busleitung zum Einsatz in der erfindungsgemäßen Förderanlage. Wie erkennbar umfasst die Busleitung 240 einen ersten Leiter 241 und einen zweiten Leiter 242. Jeder Leiter 241, 242 ist mittels einer isolierenden Umhüllung 243, 244 elektrisch isoliert. Die beiden Leiter 241, 242 sind mitsamt ihrer elektrisch isolierenden Umhüllung 243, 244 in einen ebenfalls elektrisch isolierenden und mechanisch schützenden Mantel 145 eingebettet. Der Mantel 245 weist Längsnutzen 246, 247 auf, welche es ermöglichen, den Mantel 245 zentral in Längsrichtung zwischen den beiden isolierten. Leitern 241, 243 und 242, 244 aufzutrennen. Auf diese Weise wird eine auftrennbare zweiadrige Datenleitung als Busleitung bereitgestellt, die in einfacher Weise an ein Modem angeschlossen werden kann.

Fig. 4 zeigt eine Ankopplungssituation eines Modems 320 an eine Busleitung 340. Wie erkennbar ist, ist die Busleitung 340 vor und hinter dem Modem durch Auftrennung in zwei isolierte Leiter 341, 342 in zwei separat verlaufende Stränge aufgeteilt. Ein erster Leitungsstrang 341 verläuft durch einen am Modem 320 ausgebildeten Kanal 322 und ist auf diese Weise zur Signalübertragung mit dem Modem gekoppelt. Der andere Leitungsstrang 342 wird in einem Bogen um das Modem herumgelegt und ist nicht mit dem Modem gekoppelt.

Das in Fig. 4 gezeigte Modem ist ausgebildet zur Signal- und Energieübertragung von der Busleitung zu einem Fördermotor 330 und einem Sensor 360 und zur Signal- und Energieübertragung von dem Fördermotor 330 und dem Sensor 360 in die Busleitung 340.

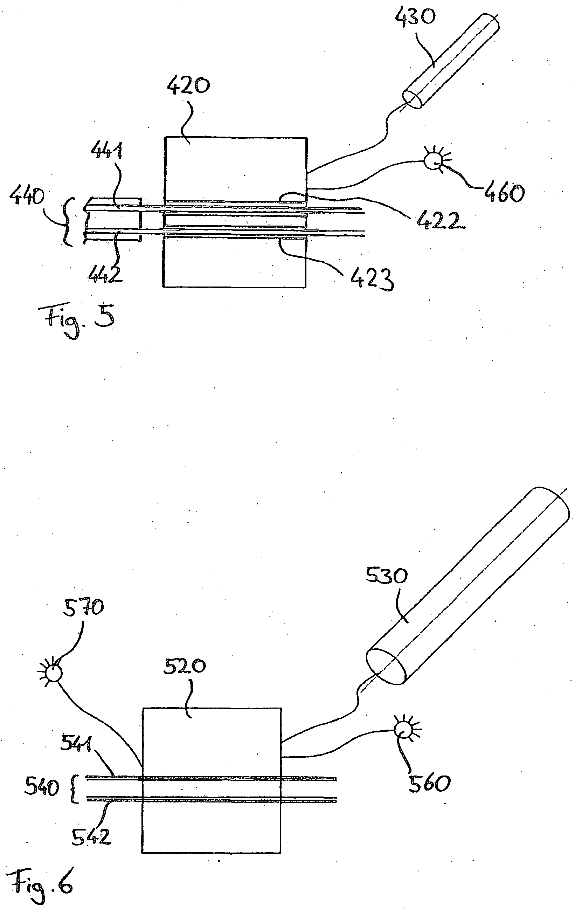

Fig. 5 zeigt eine zweite Ausgestaltung eines Modems 420, welches an eine Busleitung 440 angekoppelt ist. Wie aus Fig. 5 zu erkennen ist, dient auch das Modem 420 dazu, einen Fördermotor 430 und einen Sensor 460 an die Busleitung 440 anzukoppeln. Abweichend von Fig. 4 ist bei Fig. 5 nicht nur einer der Leitungsstränge der Busleitung 440 durch das Modem geführt, sondern beide Leitungsstränge 441, 442 verlaufen in entsprechend getrennten Ankopplungskanälen 422, 423 durch das Modem und werden beide separat zur Energie- und Datenübertragung mit höherer Leistung bzw. Bandbreite genutzt.

Fig. 6 zeigt eine weitere Ausführungsform eines Modems für eine erfindungsgemäße Förderanlage. Wie erkennbar ist, dient das Modem 520 dazu, einen Fördermotor 530 und zwei Sensoren 560, 570 an eine Busleitung 540 anzukoppeln. Wie in Fig. 5 sind beide Leitungsstränge 541, 542 zum Zwecke der Ankopplung durch das Modem geführt. Bei der Ausführungsform gemäß Fig. 6 ist der Fördermotor als Hochleistungstrommelmotor mit 400 V Versorgungsspannung ausgeführt und in diesem Fall ist es besonders bevorzugt, die Energieversorgung des 400-V-Trommelmotors durch Ankopplung an beide Busleitungsstränge zu verwirklichen.

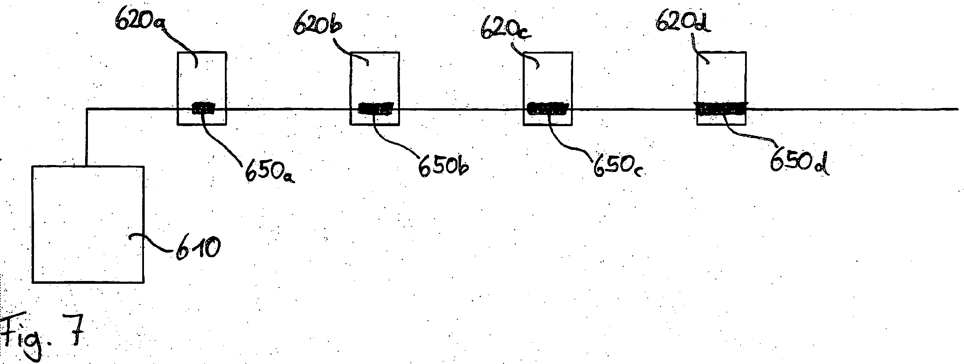

Fig. 7 zeigt eine weitere Ausgestaltung der erfindungsgemäßen Förderanlage in einer schematischen Darstellung. Wiederum ist eine Steuerungseinheit 610 vorgesehen, die mittels einer mit definiert geschlossenem Ende versehenen Busleitung 640 mit einer Mehrzahl von Peripheriegeräten gekoppelt ist, indem sie mit einem oder beiden Leitungssträngen durch einen innerhalb von Modems 620a-d ausgebildeten Ankopplungskanal/Ankopplungskanäle durchgeführt ist.

Bei der in Fig. 7 dargestellten Ausführungsform liegt in der Busleitung eine Spannung von 10.000 Volt mit einer Frequenz von 25kHz an und das erste Modem 620a ist ausgebildet, um ein Peripheriegerät mit 24 V Versorgungsspannung an die Busleitung 640 anzukoppeln. Das zweite Modem 620b ist ausgebildet, um ein Peripheriegerät mit 48 V Versorgungsspannung an die Busleitung anzukoppeln. Das dritte Modem 620c ist ausgebildet, um ein Peripheriegerät mit 230 V Versorgungsspannung an die Busleitung, 640 anzukoppeln und das vierte Modem 620d ist ausgebildet, um ein Peripheriegerät mit 400 V Versorgungsspannung an die Busleitung 640 anzukoppeln. Jedes der Modems 620a-d ist dabei so ausgeführt, dass die für die Versorgung des jeweiligen Peripheriegeräts erforderliche Energie aus der Busleitung 640 entnommen wird und zu diesem Zweck ist die Ankopplungsstrecke 650a-d innerhalb der jeweiligen Modems solcher Art ausgebildet, dass die entsprechende Versorgungsspannung aus der Busleitung 640 entnommen werden kann. Dabei ist zu verstehen, dass sowohl alle Modems solcherart ausgeführt sein können, dass jeweils ein Leitungsstrang der Busleitung durch die Modems in einem Kopplungskanal geführt wird. Des Weiteren können alle Modems solcherart ausgeführt sein, dass beide Leitungsstränge in jeweils getrennten Kanälen durch das jeweilige Modem geführt werden, um die Ankopplung zu bewirken. Insbesondere kann aber auch vorgesehen sein, dass nur bei einigen der Modems beide Leitungsstränge durch entsprechend zwei Kanäle innerhalb des Modems geführt werden und bei anderen Modems, insbesondere denjenigen mit geringerer Versorgungsspannung, nur ein Leitungsstrang der Busleitung durch das Modem geführt ist.

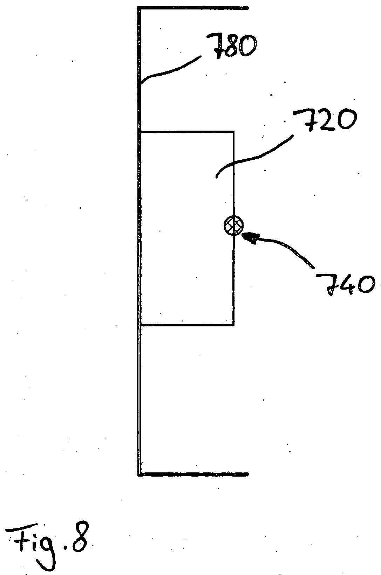

Schließlich zeigt Fig. 8 eine bevorzugte Ausführungsform der Anordnung eines Modems 720 an einem Förderprofil 780 einer erfindungsgemäßen Förderanlage. Das Förderprofil 780 ist hierbei als sich horizontal erstreckendes U-Profil mit zur Seite hin weisenden U-Schenkeln ausgeführt und dient dazu, um Förderrollen oder Fördermötoren mechanisch zu befestigen. Das Modem 720 ist in der abgebildeten Ausgestaltung im Inneren des U-Profiles angeordnet und ein Buskabel 740 ist in eine entsprechende Einlegenut des Modems zur Ankopplung eingelegt..

## Patentansprüche

1. Förderanlage zum Fördern von vereinzelten Stückgütern, umfassend:
- eine Vielzahl von Fördermotoren (30a-d),
- eine Vielzahl von Modems (20a-d)
- zumindest eine Steuerungseinheit (10) die zur Übersendung von Daten mit jedem Fördermotor zum Regeln und/oder Steuern der Fördermotoren verbunden ist,
**dadurch gekennzeichnet, dass** die Steuerungseinheit mit einer Busleitung (40) verbunden ist, ein Fördermotor mittels eines Modems (20a-d) mit der Busleitung elektrisch kontaktlos verbunden ist und das Modem ausgebildet ist, um Energie zum Antrieb des Fördermotors und zumindest ein Datensignal zur Steuerung/Regelung des Fördermotors aus der Busleitung zu entnehmen und zum Fördermotor zu leiten und
dass die Modems induktiv an die Busleitung angeschlossen sind zur Übertragung der Antriebsenergie des Fördermotors und die induktive Ankopplung eines ersten Modems zur Übertragung einer elektrischen Antriebsenergie mit einer ersten Spannung und die induktive Ankopplung eines zweiten Modems zur Übertragung einer elektrischen Antriebsenergie mit einer zweiten, von der ersten verschiedenen Spannung ausgebildet ist.

2. Förderanlage nach Anspruch 1,
**dadurch gekennzeichnet, dass** jeder Fördermotor mittels eines Modems mit der Busleitung elektrisch kontaktlos verbunden ist.

3. Förderanlage nach Anspruch 1,
**dadurch gekennzeichnet, dass** ein Fördermotor mittels jeweils eines Modems mit der Busleitung elektrisch kontaktlos verbunden ist.

4. Förderanlage nach Anspruch 1,
**dadurch gekennzeichnet, dass** jeder Fördermotor mittels jeweils eines Modems mit der Busleitung elektrisch kontaktlos verbunden ist.

5. Förderanlage nach einen der vorhergehenden Ansprüche, **gekennzeichnet durch** ein konfigurierbares Modem, welches einen Kopplungsteil, der ausgebildet ist, um Energie und Signale aus der Busleitung auszulesen und Signale in die Busleitung einzuspeisen und einem konfigurierbaren Anschlussteil aufweist, der dazu konfigurierbar ist, um die Energie und/oder die Signale an einen Verbraucher oder Sensor in die von diesem benötigten Form zu bringen.

6. Förderanlage nach dem vorhergehenden Anspruch 5,
**dadurch gekennzeichnet, dass** das konfigurierbare Modem ausgebildet ist, um aus der Busleitung elektrische Energie zu entnehmen und ein Stellglied aufweist, um die Spannung dieser elektrischen Energie einzustellen und/oder dass das konfigurierbare Modem ausgebildet ist, um aus der Busleitung ein Datensignal zu entnehmen und ein Stellglied aufweist, um den Spannungsbereich und/oder Frequenzbereich dieses Datensignals einzustellen.

7. Förderanlage nach einem der vorhergehenden Ansprüche 5 oder 6,
**dadurch gekennzeichnet, dass** das konfigurierbare Modem induktiv an die Busleitung angeschlossen ist zur Übertragung der Antriebsenergie des Fördermotors und die wirksame Kopplungslänge (50a-d, 650a-d) der induktiven Ankopplung veränderbar ist, um die Spannung der aus der Busleitung induktiv übertragenen Antriebsenergie einzustellen.

8. Förderanlage nach dem vorhergehenden Anspruch,
**dadurch gekennzeichnet, dass** die zumindest zwei, vorzugsweise mehreren Steuerungseinheiten ausgebildet sind, um über die Steuerdatenleitung Signale auszutauschen, welche ein Stückgut betreffen, das von einem durch eine erste Steuerungseinheit gesteuerten Bereich der Förderanlage in einen von einer zweiten Steuerungseinheit der Förderanlage gesteuerten Bereich gefördert wird.

9. Förderanlage nach einem der vorhergehenden Ansprüche,
**gekennzeichnet durch** eine zentrale Förderanlagensteuerung, welche mit der/den Steuerungseinheit(en) über Datenleitungen verbunden ist und ausgebildet ist, um die Steuerungseinheit(en) so anzusteuern, dass bestimmte Stückgüter von einer Ausgangsadresse zu einer Zieladresse gefördert werden, insbesondere von einer Ausgangsadresse, die in einem von einer ersten Steuerungseinheit gesteuerten Bereich der Förderanlage liegt zu einer Zieladresse, die in einem von einer zweiten Steuerungseinheit gesteuerten Bereich der Förderanlage liegt.

10. Förderanlage nach einem der vorhergehenden Ansprüche,
**dadurch gekennzeichnet, dass** zumindest ein Modem, vorzugsweise mehrere Modems einen Kanal aufweisen, um einen der beiden Leitungsstränge als Primärleiter aufzunehmen und im Bereich neben oder um diesen Kanal zumindest eine Sekundärspule innerhalb des Modems angeordnet ist, die elektromagnetisch oder induktiv mit dem Primärleiter gekoppelt ist.

11. Förderanlage nach dem vorhergehenden Anspruch,
**dadurch gekennzeichnet, dass** das Modem ausgebildet ist, um beide Leitungsstränge als Primärleiter in jeweils einem Kanal aufzunehmen und elektromagnetisch oder induktiv an jeweilige Sekundärspulen anzukoppeln.

12. Förderanlage nach dem vorhergehenden Anspruch,
**dadurch gekennzeichnet, dass** der Kanal durch einen nach zumindest einer Seite offenen Ferritkern gebildet wird, um den in zumindest einem Bereich eine Sekundärwicklung zur Ausbildung der Sekundärspule gewickelt ist.

13. Energieversorgungs- und Datenübermittlungseinrichtung für eine Förderanlage nach einem der vorhergehenden Ansprüche, umfassend:
- eine Busleitung umfassend, insbesondere bestehend aus zwei vorzugsweise linearen Leitungssträngen,
- zumindest eine Steuerungseinheit die zur Übersendung von Daten mit der Busleitung verbunden ist,
- eine Mehrzahl von Modems,
o die vorzugsweise kontaktlos mit der Busleitung verbindbar sind, um elektrische Energie aus der Busleitung zu entnehmen, Daten aus der Busleitung auszulesen und vorzugsweise weiterhin in eine in der Busleitung anliegende Wechselspannung Daten einzumodulieren oder auf diese Wechselspannung aufzumodulieren,
o die eine Schnittstelle zur Verbindung mit einem externen Verbraucher, insbesondere einem Fördermotor oder einem Aktuator und/oder einem externen Sensor aufweisen, und
o wobei die Modems induktiv an die Busleitung angeschlossen sind zur Übertragung der Antriebsenergie des Fördermotors und die induktive Ankopplung eines ersten Modems zur Übertragung einer elektrischen Antriebsenergie mit einer ersten Spannung und die induktive Ankopplung eines zweiten Modems zur Übertragung einer elektrischen Antriebsenergie mit einer zweiten, von der ersten verschiedenen Spannung ausgebildet ist

14. Energieversorgungs- und Datenübermittlungseinrichtung nach dem vorhergehenden Anspruch,
**dadurch gekennzeichnet, dass** die Steuerungseinheit, eines oder mehrere der Modems und/oder die Busleitung nach einem der vorhergehenden Ansprüche fortgebildet ist/sind.

15. Verfahren zur Förderung von Stückgütern, mit den Schritten
- Anlegen einer elektrischen Wechselspannung an einen Primärleiter,
- Aufmodulieren eines Datensignals auf die elektrische Wechselsparinung,
- Induktive Übertragung der elektrischen Wechselspannung auf eine Sekundärwicklung in einem Modem und Leiten der in der Sekundärwicklung erzeugten Stromes zu einem Fördermotor zum Antreiben des Fördermotors,
- Auslesen des Datensignals aus dem Primärleiter in dem Modem und Leiten des ausgelesenen Datensignals zum Fördermotor zum Steuern und/oder Regeln des Fördermotors,
- Fördern des Stückgutes mit dem Fördermotor,
- wobei eine Mehrzahl von Modems induktiv an die Busleitung angeschlossen sind zur Übertragung der Antriebsenergie des Fördermotors und mittels der induktiven Ankopplung eines ersten dieser Modems einer erste Spannung übertragen wird und mittels der induktiven Ankopplung eines zweiten Modems dieser Modems eine elektrischen Antriebsenergie mit einer zweiten, von der ersten verschiedenen Spannung übertragen wird.

16. Modemsystem (20a-d) zur Übertragung von Energie und Daten aus einer Busleitung an einen Fördermotor einer Förderanlage, das Modem umfassend
- Mittel zur elektrisch kontaktlosen Verbindung des Modems mit der Busleitung, welche ausgebildet sind, um Energie zum Antrieb des Fördermotors und zumindest ein Datensignal zur Steuerung/Regelung des Fördermotors aus der Busleitung zu entnehmen und zum Fördermotor zu leiten,
wobei das Modemsystem mehrere Modems umfasst, die ausgebildet ist,
- um aus zwei elektrisch voneinander isolierten Leitungssträngen der Busleitung die für den Fördermotor benötigte Antriebsenergie durch induktive Ankopplung an eine in den Leitungssträngen anliegende Wechselspannung zu entnehmen und
- die für die Steuerung und/oder Regelung des Fördermotors erforderlichen, auf die Wechselspannung in den Leitungssträngen aufmodulierte Signale auszulesen und
- um ein Sensorsignal von zumindest einem Sensor (160) zur Erfassung von Stückgut in einem Bereich der Förderanlage in eine in der Busleitung (140) anliegende Wechselspannung einzukoppeln oder auf diese Wechselspannung aufzumodulieren und den Sensor zur Übersendung der Sensordaten mit der Steuerungseinheit über das Modem (120a-c) verbindet,
**dadurch gekennzeichnet, dass** die Modems des Modemsystems induktiv an die Busleitung angeschlossen werden können zur Übertragung der Antriebsenergie des Fördermotors und ein erstes Modem Mittel zur induktiven Ankopplung zur Übertragung einer elektrischen Antriebsenergie mit einer ersten Spannung und ein zweites Modem Mittel zur induktiven Ankopplung zur Übertragung einer elektrischen Antriebsenergie mit einer zweiten, von der ersten verschiedenen Spannung aufweist.

17. Modemsystem nach dem vorhergehenden Anspruch 16,
**dadurch gekennzeichnet, dass** das Modem durch die Merkmale des Modems in der Förderanlage nach einem der vorhergehenden Ansprüche 11-12 fortgebildet ist.

18. Verwendung eines Modemsystems nach Anspruch 16 oder 17 zur Übertragung von Energie und Daten aus einer Busleitung an einen Fördermotor einer Förderanlage zur Förderung von Stückgütern über den Fördermotor mittels der Energie.

## Claims

1. Conveyor system for conveying individual piece goods, comprising:
- a plurality of conveyor motors (30a-d),
- a plurality of modems (20a-d)
- at least one control unit (10) which is connected to every conveyor motor to transmit data in order to regulate and/or control the conveyor motors,
**characterised in that** the control unit is connected to a bus line (40), a conveyor motor is connected by means of a modem (20a-d) to the bus line without electrical contact, and the modem is configured to pick up from the bus line and route to the conveyor motor energy in order to drive the conveyor motor and at least one data signal in order to control/regulate the conveyor motor, and
**in that** the modems are inductively connected to the bus line in order to transmit the driving energy of the conveyor motor, and the inductive coupling of a first modem for transmitting electrical driving energy is configured with a first voltage and the inductive coupling of a second modem for transmitting electrical driving energy is configured with a second voltage different from the first.

2. Conveyor system as claimed in claim 1,
**characterised in that** every conveyor motor is connected by means of a modem to the bus line without electrical contact.

3. Conveyor system as claimed in claim 1,
**characterised in that** a conveyor motor is connected by means of a modem in each case to the bus line without electrical contact.

4. Conveyor system as claimed in claim 1,
**characterised in that** every conveyor motor is connected by means of a modem in each case to the bus line without electrical contact.

5. Conveyor system as claimed in one of the preceding claims,
**characterised by** a configurable modem comprising a coupling part which is configured to read energy and signals from the bus line and feed signals to the bus line and a configurable connection part which can be configured to route the energy and/or signals to a consumer or sensor in the form required thereby.

6. Conveyor system as claimed in the preceding claim 5,
**characterised in that** the configurable modem is configured to pick up electrical energy from the bus line and has an actuator in order to set the voltage of this electrical energy and/or the configurable modem is configured to pick up a data signal from the bus line and has an actuator in order to set the voltage range and/or frequency range of this data signal.

7. Conveyor system as claimed in one of the preceding claims 5 or 6,
**characterised in that** the configurable modem is inductively connected to the bus line in order to transmit the driving energy of the conveyor motor and the effective coupling length (50a-d, 650a-d) of the inductive coupling is variable in order to adjust the voltage of the driving energy inductively transmitted from the bus line.

8. Conveyor system as claimed in the preceding claim,
**characterised in that** the at least two, preferably several control units are configured to exchange signals across the control data line which relate to a piece good that is being conveyed from an area of the conveyor system controlled by a first control unit into an area controlled by a second control unit of the conveyor system.

9. Conveyor system as claimed in one of the preceding claims, **characterised by** a central conveyor system control, which is connected to the control unit (s) via data lines and is configured to activate the control unit(s) so that specific piece goods are conveyed from an initial address to a target address, in particular from an initial address lying in an area of the conveyor system controlled by a first control unit to a target address lying in an area of the conveyor system controlled by a second control unit.

10. Conveyor system as claimed in one of the preceding claims, **characterised in that** at least one modem, preferably several modems, has/have a channel in order to accommodate one of the two conductor runs as the primary conductor, and in the area next to or around this channel at least one secondary coil is provided inside the modem which is electromagnetically or inductively coupled with the primary conductor.

11. Conveyor system as claimed in the preceding claim, **characterised in that** the modem is configured to accommodate both conductor runs as primary conductor, each in a channel, and electromagnetically or inductively couple them to respective secondary coils.

12. Conveyor system as claimed in the preceding claim, **characterised in that** the channel is provided in the form of a ferrite core with at least one end open around at least one region of which a secondary winding is wound to form the secondary coil.

13. Energy supply and data transmission system for a conveyor system as claimed in one of the preceding claims, comprising:
- a bus line comprising in particular two preferably linear conductor runs,
- at least one control unit which is connected to the bus line in order to transmit data,
- a plurality of modems,
o which can be connected to the bus line preferably without contact in order to pick up electrical energy from the bus line, read data from the bus line and preferably also modulate data into an alternating voltage applied to the bus line or modulate onto this alternating voltage,
o which have an interface for connecting to an external consumer, in particular a conveyor motor or an actuator and/or an external sensor, and
o the modems are inductively connected to the bus line in order to transmit the driving energy of the conveyor motor, and the inductive coupling of a first modem for transmitting electrical driving energy is configured with a first voltage and the inductive coupling of a second modem for transmitting electrical driving energy is configured with a second voltage different from the first.

14. Energy supply and data transmission system as claimed in the preceding claim,
**characterised in that** the control unit, one or more of the modems and/or the bus line has/have the features as claimed in one of the preceding claims.

15. Method of conveying piece goods, comprising the steps
- applying an electric alternating voltage to a primary conductor,
- modulating a data signal onto the electric alternating voltage,
- inductively transmitting the electric alternating voltage to a secondary winding in a modem and routing the current generated in the secondary winding to a conveyor motor in order to drive the conveyor motor,
- reading the data signal from the primary conductor in the modem and routing the read data signal to the conveyor motor in order to control and/or regulate the conveyor motor,
- conveying the piece good by means of the conveyor motor,
- and a plurality of modems are inductively connected to the bus line in order to transmit the driving energy of the conveyor motor, and by means of the inductive coupling of a first one of these modems, a first voltage is transmitted and by means of the inductive coupling of a second one of these modems, electrical driving energy with a second voltage different from the first is transmitted.

16. Modem system (20a-d) for transmitting energy and data from a bus line to a conveyor motor of a conveyor system, the modem comprising
- means for connecting the modem to the bus line without electrical contact, configured to pick up from the bus line and route to the conveyor motor energy in order to drive the conveyor motor and at least one data signal in order to control/regulate the conveyor motor,
and the modem system comprises several modems and is configured
- to pick up the driving energy needed for the conveyor motor from two conductor runs of the bus line electrically insulated from one another by an inductive coupling to an alternating voltage applied to the conductor runs and
- read the signals modulated onto the alternating voltage in the conductor runs necessary for controlling and/or regulating the conveyor motor and
- couple a sensor signal of at least one sensor (160) for detecting piece goods in an area of the conveyor system into an alternating voltage applied to the bus line (140) or modulate onto this alternating voltage and connect the sensor to the control unit via the modem (120a-c) in order to transmit the sensor data,
**characterised in that** the modems of the modem system can be inductively connected to the bus line in order to transmit the driving energy of the first motor, and a first modem has means for establishing an inductive coupling in order to transmit electrical driving energy with a first voltage and a second modem has means for establishing an inductive coupling in order to transmit electrical driving energy with a second voltage different from the first.

17. Modem system as claimed in the preceding claim 16, **characterised in that** the modem comprises the additional features of the modems in the conveyor system as claimed in one of the preceding claims 11-12.

18. Use of a modem system as claimed in claim 16 or 17 for transmitting energy and data from a bus line to a conveyor motor of a conveyor system in order to convey piece goods via the conveyor motor by means of the energy.

## Revendications

1. Installation de transport servant à transporter des articles de détail isolés, comprenant :
- une pluralité de moteurs de transport (30a - d) ;
- une pluralité de modems (20a-d)
- au moins une unité de commande (10), qui est reliée, aux fins de l'envoi de données, à chaque moteur de transport afin de régler et/ou de commander les moteurs de transport,
**caractérisée en ce que** l'unité de commande est reliée à une ligne de bus (40), **en ce qu'**un moteur de transport est relié sans contact électriquement à la ligne de bus au moyen d'un modem (20a - d), et **en ce que** le modem est réalisé afin de prélever de la ligne de bus de l'énergie servant à entraîner le moteur de transport et au moins un signal de données servant à commander/à régler le moteur de transport et de les conduire au moteur de transport, et
**en ce que** les modems sont raccordés par induction à la ligne de bus aux fins de la transmission de l'énergie d'entraînement du moteur de transport, et **en ce que** l'accouplement par induction d'un premier modem aux fins de la transmission d'une énergie d'entraînement électrique est réalisé à une première tension et l'accouplement par induction d'un deuxième modem aux fins de la transmission d'une énergie d'entraînement électrique est réalisé à une deuxième tension différente de la première tension.

2. Installation de transport selon la revendication 1,
**caractérisée en ce que** chaque moteur de transport est relié au moyen d'un modem, sans contact électrique, avec la ligne de bus.

3. Installation de transport selon la revendication 1,
**caractérisé en ce qu'**un moteur de transport est relié au moyen d'un modem respectif, sans contact électrique, avec la ligne de bus.

4. Installation de transport selon la revendication 1,
**caractérisé en ce que** chaque moteur de transport est relié au moyen d'un modem respectif, sans contact électrique, avec la ligne de bus.

5. Installation de transport selon l'une des revendications précédentes,
**caractérisée par** un modem configurable, qui présente une partie de couplage, qui est réalisée afin d'extraire par lecture de la ligne de bus de l'énergie et des signaux et afin d'entrer dans la ligne de bus des signaux, ainsi qu'une partie de raccordement configurable, qui peut être configurée afin d'amener l'énergie et/ou les signaux à un consommateur ou à un capteur dans la forme requise par ces derniers.

6. Installation de transport selon la revendication précédente 5,
**caractérisée en ce que** le modem configurable est réalisé afin de prélever de la ligne de bus de l'énergie électrique, et présente un organe de réglage afin d'ajuster la tension de ladite énergie électrique, et/ou **en ce que** le modem configurable est réalisé afin de prélever de la ligne de bus un signal de données, et présente un organe de réglage afin d'ajuster la plage de tension et/ou la plage de fréquence dudit signal de données.

7. Installation de transport selon l'une quelconque des revendications précédentes 5 ou 6,
**caractérisée en ce que** le modem configurable est raccordé par induction à la ligne de bus afin de transmettre l'énergie d'entraînement du moteur de transport, et **en ce que** la longueur de couplage (50a - d, 650 a -d) active de l'accouplement par induction peut varier afin d'ajuster la tension de l'énergie d'entraînement transmise par induction depuis la ligne de bus.

8. Installation de transport selon la revendication précédente,
**caractérisée en ce que** les deux unités de commande ou plus, de préférence plusieurs unités de commande, sont réalisées afin d'échanger par l'intermédiaire de la ligne de données de commande des signaux, qui concernent un article de détail, qui est transporté depuis une zone, commandée par une première unité de commande, de l'installation de transport dans une zone commandée par une deuxième unité de commande de l'installation de transport.

9. Installation de transport selon l'une quelconque des revendications précédentes,
**caractérisée par** une commande d'installation de transport centrale, qui est reliée à l'unité de commande/aux unités de commande par l'intermédiaire de lignes de données et qui est réalisée afin de commander l'unité de commande/les unités de commande de telle manière que certains articles de détail sont transportés depuis une adresse de départ vers une adresse de destination, en particulier depuis une adresse de départ, qui se trouve dans une zone, commandée par une première unité de commande, de l'installation de transport, vers une adresse de destination, qui se trouve dans une zone, commandée par une deuxième unité de commande, de l'installation de transport.

10. Installation de transport selon l'une quelconque des revendications précédentes,
**caractérisée en ce qu'**au moins un modem, de préférence plusieurs modems, présentent un canal afin de recevoir au moins un des deux faisceaux de lignes en tant que conducteurs primaires, et **en ce qu'**au moins une bobine secondaire est disposée à l'intérieur du modem dans la zone à côté ou autour dudit canal, laquelle est couplée de manière électromagnétique ou par induction au conducteur primaire.

11. Installation de transport selon la revendication précédente,
**caractérisée en ce que** le modem est réalisé afin de recevoir deux faisceaux de lignes en tant que conducteurs primaires dans respectivement un canal et afin de les accoupler de manière électromagnétique ou par induction à des bobines secondaires respectives.

12. Installation de transport selon la revendication précédente,
**caractérisée en ce que** le canal est formé par un noyau de ferrite ouvert vers au moins un côté, autour duquel un enroulement secondaire servant à réaliser la bobine secondaire est enroulé dans au moins une zone.

13. Dispositif d'alimentation en énergie et de transmission de données pour une installation de transport selon l'une quelconque des revendications précédentes, comprenant :
- une ligne de bus, comprenant, en particulier constituée de deux faisceaux de lignes de préférence linéaires,
- au moins une unité de commande, qui est reliée à la ligne de bus aux fins de l'envoi de données,
- une multitude de modems,
- - qui peuvent être reliés sans contact à la ligne de bus afin de prélever de la ligne de bus de l'énergie électrique, d'extraire par lecture de la ligne de bus des données et de moduler des données de préférence par la suite dans une tension alternative appliquée dans la ligne de bus et de les moduler sur ladite tension alternative,
- - qui présentent une interface destinée à être reliée à un consommateur externe, en particulier à un moteur de transport ou à un actionneur et/ou à un capteur externe, et
- - les modems étant raccordés par induction à la ligne de bus aux fins de la transmission de l'énergie d'entraînement du moteur de transport, et l'accouplement par induction d'un premier modem aux fins de la transmission d'une énergie d'entraînement électrique étant réalisé à une première tension et l'accouplement par induction d'un deuxième modem aux fins de la transmission d'une énergie d'entraînement électrique étant réalisé à une deuxième tension différente de la première tension.

14. Dispositif d'alimentation en énergie et de transmission de données selon la revendication précédente,
**caractérisé en ce que** l'unité de commande, un ou plusieurs des modems, et/ou la ligne de bus selon l'une quelconque des revendications précédentes sont perfectionnés.

15. Procédé servant à transporter des articles de détail, comprenant les étapes suivantes :
- l'application d'une tension alternative électrique au niveau d'un conducteur primaire,
- la modulation d'un signal de données sur la tension alternative électrique,
- la transmission par induction de la tension alternative électrique sur un enroulement secondaire dans un modem et la conduite du flux produit dans l'enroulement secondaire à un moteur de transport afin d'entraîner le moteur de transport,
- la lecture du signal de données provenant du conducteur primaire dans le modem et la conduite du signal de données lu au moteur de transport afin de commander et/ou de régler le moteur de transport,
- le transport de l'article de détail à l'aide du moteur de transport,
- une multitude de modems étant raccordés par induction à la ligne de bus aux fins de la transmission de l'énergie d'entraînement du moteur de transport, et une énergie d'entraînement électrique étant transmise au moyen de l'accouplement par induction d'un premier desdits modems à une première tension et une énergie d'entraînement électrique étant transmise au moyen de l'accouplement par induction d'un deuxième modem desdits modems à une deuxième tension différente de la première tension.

16. Système de modems (20a - d) servant à transmettre de l'énergie et des données provenant d'une ligne de bus à un moteur de transport d'une installation de transport, ledit modem comprenant :
- des moyens servant à relier de manière électrique sans contact le modem à la ligne de bus, qui sont réalisés afin de prélever de la ligne de bus de l'énergie servant à entraîner le moteur de transport et au moins un signal de données servant à commander/régler le moteur de transport et de les conduire au moteur de transport, le système de modems comprenant plusieurs modems, qui sont réalisés,
- afin de prélever des deux faisceaux de lignes isolés électriquement l'un de l'autre de la ligne de bus l'énergie d'entraînement requise par le moteur de transport par un accouplement par induction à une tension alternative appliquée dans les faisceaux de lignes, et
- extraire par lecture des signaux requis pour la commande et/ou le réglage du moteur de transport, modulés sur la tension alternative dans les faisceaux de lignes et
- afin d'injecter dans une tension alternative appliquée dans la ligne de bus (140) un signal de capteur d'au moins un capteur (160) servant à détecter un article de détail dans une zone de l'installation de transport ou de le moduler sur ladite tension alternative et afin de relier le capteur, aux fins l'envoi des données de capteur, à l'unité de commande par l'intermédiaire du modem (120a - c),
**caractérisé en ce que** les modems du système de modems peuvent être raccordés par induction à une ligne de bus aux fins de la transmission de l'énergie électrique du moteur de transport, et **en ce qu'**un premier modem présente des moyens servant à l'accouplement par induction aux fins de la transmission d'une énergie d'entraînement électrique à une première tension et un deuxième mode présente des moyens servant à l'accouplement par induction aux fins de la transmission d'une énergie d'entraînement électrique à une deuxième tension différente de la première tension.

17. Système de modems selon la revendication 16,
**caractérisé en ce que** le modem est perfectionné par les caractéristiques du modem dans l'installation de transport selon l'une quelconque des revendications précédentes 11 - 12.

18. Utilisation d'un système de modems selon la revendication 16 ou 17 servant à transmettre de l'énergie et des données provenant d'une ligne de bus à un moteur de transport d'une installation de transport servant à transporter des articles de détail par l'intermédiaire du moteur de transport au moyen de l'énergie.
